# FASCICULE DE BREVET EUROPEEN

(11) **EP 3 278 036 B1**
(45) Date de publication et mention de la délivrance du brevet: **11.09.2019**
(21) Numéro de dépôt: 16712863.6
(22) Date de dépôt: 29.03.2016
(51) Int. Cl.: F24S 10/40, F24S 10/75

(54) **CONDUCTEUR THERMIQUE MULTI-ELEMENTS POUR TUBE SOUS VIDE D'UN CAPTEUR SOLAIRE THERMIQUE**
MEHRELEMENT-WÄRMELEITER FÜR EIN VAKUUMROHR EINES SOLARTHERMISCHEN KOLLEKTORS
MULTI-ELEMENT THERMAL CONDUCTOR FOR A VACUUM TUBE OF A SOLAR THERMAL COLLECTOR

(30) Priorité: 31.03.2015 FR 1552738
(43) Date de publication de la demande: 07.02.2018
(73) Titulaire: Commissariat à l'Énergie Atomique et aux Énergies Alternatives, 75015 Paris (FR)
(72) Inventeur: TANTOLIN, Christian, 38660 Lumbin (FR); PAPILLON, Philippe, 73000 Chambéry (FR)
(74) Mandataire: Brevalex
(86) Numéro de dépôt international: PCT/EP2016/056823
(87) Numéro de publication internationale: WO 2016/156332

(56) Documents cités:
- WO-A1-2005/088207
- DE-A1-102010 036 393
- FR-A1- 2 444 238
- FR-A1- 2 531 521
- FR-A1- 2 902 181
- JP-A- 2014 005 958

## Description

### DOMAINE TECHNIQUE

La présente invention se rapporte au domaine général des capteurs solaires thermiques à tubes sous vide, et plus précisément à double tubes sous vide. De tels capteurs permettent de recueillir l'énergie lumineuse transmise par rayonnement et de la communiquer à un fluide caloporteur sous forme de chaleur.

L'invention trouve des applications dans plusieurs domaines de l'industrie, et notamment pour le chauffage de bâtiments, la production d'eau chaude sanitaire (ECS) ou encore dans divers procédés industriels.

L'invention propose ainsi un conducteur thermique pour tube sous vide d'un capteur solaire thermique à double tubes sous vide, comprenant au moins deux éléments conducteurs mobiles l'un par rapport à l'autre, un capteur solaire thermique à double tubes sous vide comprenant un double tube sous vide muni d'un tel conducteur thermique, ainsi qu'une centrale solaire thermique à concentration comportant une pluralité de tels capteurs solaires thermiques à double tubes sous vide.

### ÉTAT DE LA TECHNIQUE ANTÉRIEURE

Dans le domaine général des capteurs solaires thermiques, les capteurs à tubes sous vide sont constitués d'une série de tubes de verre, dont l'isolation est à simple paroi ou à double paroi, dans lesquels passe un tube collecteur de chaleur. A l'intérieur, chaque tube de verre comprend un absorbeur thermique, qui comporte une substance absorbant les rayons du soleil. Dans le cas d'un double tube de verre, comprenant un tube extérieur et un tube intérieur, l'absorbeur thermique est généralement disposé sous forme de couche absorbante sur la paroi externe du tube intérieur. En revanche, dans le cas d'un simple tube de verre, l'absorbeur thermique est typiquement disposé sous forme de couche absorbante sur le tube collecteur de chaleur. L'invention est plus précisément concernée par le cas des capteurs solaires thermiques à double tubes sous vide. Ainsi, la chaleur captée par la couche absorbante, formant un revêtement sélectif, est alors transmise vers un collecteur par le biais du tube collecteur de chaleur.

Le transport de chaleur par l'intermédiaire du tube collecteur de chaleur peut être réalisé selon deux principes, à savoir : par flux direct ou par caloduc.

Dans le cas d'un capteur solaire thermique à tubes sous vide à flux direct (ou circulation directe), le fluide caloporteur circule directement dans le tube collecteur de chaleur, à l'intérieur du tube en verre. Généralement, le tube collecteur de chaleur se présente alors sous la forme d'un tube métallique, en forme de U ou sous forme de double tube constitué par deux tubes concentriques, de sorte à permettre l'aller et le retour du fluide caloporteur depuis le collecteur.

Dans le cas d'un capteur solaire thermique à tubes sous vide à caloduc, le tube collecteur de chaleur constitue le caloduc et permet le transport de chaleur vers le collecteur. Plus précisément, ce caloduc se présente typiquement sous la forme d'un tube de cuivre entièrement fermé, vide d'air et contenant une petite quantité de fluide, qui est en contact dans le collecteur avec la conduite de fluide caloporteur. Ce caloduc forme un échangeur thermique utilisant les mécanismes de changement d'état liquide-gaz du fluide qu'il contient selon le principe suivant : en captant la chaleur absorbée par la couche absorbante, le fluide s'évapore et s'élève jusqu'en partie haute pour céder sa chaleur en se condensant par contact avec le fluide caloporteur de l'installation qui circule en partie haute ; de nouveau à l'état liquide, il retourne alors par gravité en bas du caloduc.

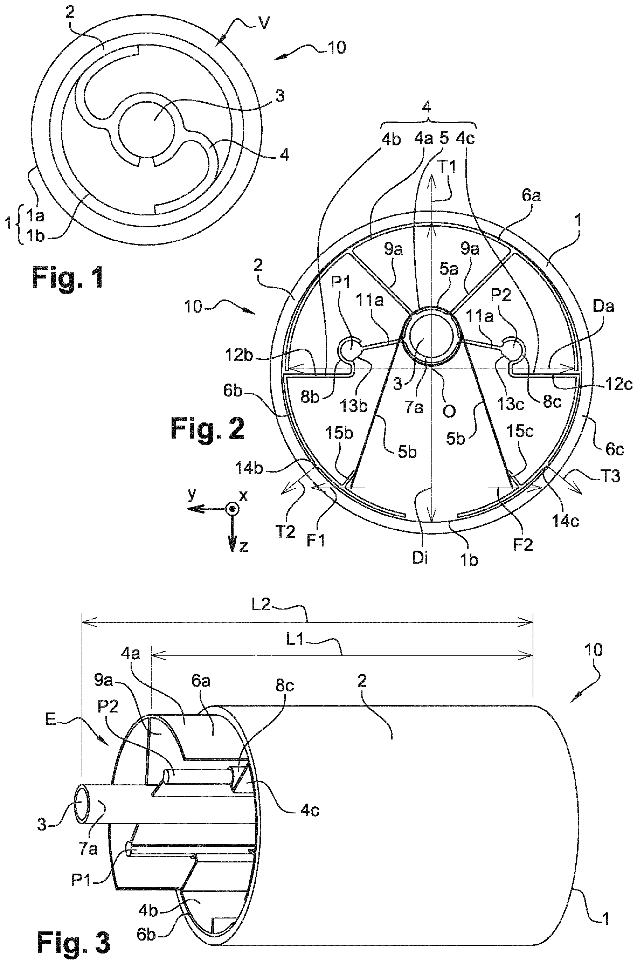

A titre d'exemple, la figure 1 représente partiellement, en coupe, un exemple de double tube 1 en verre d'un capteur solaire thermique 10 à double tubes sous vide utilisant la technologie de transport de chaleur par caloduc.

Le double tube 1 comprend un tube extérieur la et un tube intérieur 1b, entre lesquels un vide V est formé. Par ailleurs, la paroi externe du tube intérieur 1b est recouverte d'un revêtement sélectif ou couche absorbante 2. De cette façon, la couche absorbante 2 est avantageusement située entre le tube extérieur la et le tube intérieur 1b, dans la zone sous vide V, et peut ainsi être protégée. De plus, le tube collecteur de chaleur situé à l'intérieur du double tube 1 se présente sous la forme d'un caloduc 3 en cuivre.

Le rayonnement solaire atteignant le double tube 1 se transforme en chaleur au niveau de la couche absorbante 2 du tube intérieur 1b. La sélectivité de cette couche absorbante 2, présentant une bonne absorption du rayonnement solaire visible et une faible émission du rayonnement dans le domaine de l'infrarouge, associée au vide d'air V entre les tubes extérieur la et intérieur 1b permet de limiter les pertes thermiques en convection vers le milieu ambiant.

Afin de conduire la chaleur dégagée au niveau de la couche absorbante 2 du tube intérieur 1b vers le fluide caloporteur de l'installation solaire, usuellement de l'eau ou de l'eau glycolée, voire de l'huile, il est nécessaire d'assurer un transfert thermique entre la couche absorbante 2 du tube intérieur 1b et le tube collecteur de chaleur sous forme de caloduc 3.

Pour ce faire, comme représenté sur la figure 1, le transfert thermique entre le tube intérieur 1b et le tube collecteur de chaleur, ici le tube caloduc 3, est généralement réalisé avec un conducteur thermique métallique, par exemple en cuivre, aluminium ou graphite. Dans cet exemple, il se présente sous la forme d'un profilé 4. De cette façon, la chaleur absorbée est transmise vers le collecteur grâce au caloduc 3 et à son profilé 4.

Toutefois, le principal problème quant à l'efficacité du transfert thermique réalisé entre le tube intérieur 1b et le tube collecteur de chaleur 3 par le biais du conducteur thermique métallique 4 concerne les tolérances dimensionnelles du tube intérieur 1b, typiquement de plusieurs dixièmes de millimètres. Ainsi, il doit généralement être prévu un système de rattrapage de jeu afin de limiter la création d'une lame d'air entre le conducteur thermique métallique 4 et le tube intérieur 1b en verre. En effet, l'air étant un bon isolant thermique, l'apparition d'une lame d'air à cet endroit limiterait les échanges thermiques, et donc provoquerait une hausse de la température de la couche absorbante 2. En définitif, cette hausse de température se traduirait par des pertes thermiques plus élevées vers le milieu ambiant, et ainsi par une réduction des performances thermiques du capteur solaire thermique 10.

Plusieurs solutions ont déjà été envisagées dans l'art antérieur pour pouvoir récupérer les jeux géométriques entre le tube intérieur en verre et le conducteur thermique métallique, en utilisant notamment un conducteur thermique présentant une bonne élasticité.

Ainsi, la demande internationale WO 2005/088207 A1 divulgue par exemple l'utilisation d'un conducteur thermique très fin dont l'élasticité est obtenue par enroulement en spiral de sorte à obtenir un effet ressort. Toutefois, une telle solution présente plusieurs inconvénients. Tout d'abord, une difficulté de montage et de mise en place du conducteur thermique. De plus, une faible performance du conducteur thermique : en effet, pour présenter l'élasticité suffisante, le conducteur thermique doit être fin et long, ce qui est alors préjudiciable à la conduction de chaleur. Enfin, lors des phases de stagnation, la température du conducteur thermique peut être élevée, et de ce fait les propriétés mécaniques du métal peuvent être dégradées : la tendance est alors de recuire le métal, surtout s'il s'agit du cuivre ou de l'aluminium qui sont des alliages de bonne conduction thermique, et de ce fait d'entraîner une perte d'élasticité.

Par ailleurs, la demande de brevet français FR 2 902 181 A1 décrit une réalisation de conducteur thermique en aluminium, proche de celle envisagée à la figure 1 décrite précédemment. Le conducteur thermique est obtenu par extrusion et ne comporte qu'une pièce unique. Globalement, il présente une forme en S avec un caloduc placé au centre du S. L'utilisation d'un profilé en aluminium, bon conducteur thermique, permet d'obtenir un bon transfert thermique. Cependant, avec un tel profilé, la chaleur doit parcourir une distance relativement importante, de sorte qu'il est nécessaire d'utiliser des épaisseurs de matière suffisantes pour ne pas être pénalisé en termes de conduction thermique. De plus, en raison de l'épaisseur importante du profilé, celui-ci présente une faible élasticité et ne peut ainsi pas permettre de récupérer des écarts de jeu très importants.

En outre, dans la demande de brevet américain US 2008/0156314 A1, un fluide caloporteur circule dans un tube collecteur de chaleur sous la forme d'une épingle en forme de U. Le matériau conducteur thermique utilisé est à base de carbone, par exemple sous forme de mousse, de fibres de carbone, ou de graphite compressé. L'ensemble est maintenu en contact avec le tube en verre intérieure grâce à l'élasticité du conducteur thermique. L'inconvénient de cette solution est d'avoir un contact thermique médiocre entre le matériau conducteur thermique et le tube collecteur de chaleur en épingle dans lequel circule le fluide caloporteur.

On connaît également de la demande de brevet français FR 2 531521 A1 l'utilisation d'un profilé en aluminium pour la réalisation du transfert thermique entre le tube intérieur en verre et un caloduc. Toutefois, il n'est prévu qu'un seul profilé et donc aucun rattrapage de jeu n'est possible. Par ailleurs, aucune pièce n'est en mouvement.

### EXPOSÉ DE L'INVENTION

Il existe ainsi un besoin pour proposer une solution alternative améliorée de conducteur thermique pour un capteur solaire thermique à double tubes sous vide, assurant le transfert de chaleur entre un double tube sous vide du capteur solaire et un tube collecteur de chaleur interne à ce double tube sous vide, permettant de rattraper des jeux géométriques susceptibles d'apparaître entre l'intérieur du double tube et le conducteur thermique, afin d'augmenter l'efficacité du transfert thermique.

L'invention a pour but de remédier au moins partiellement aux besoins mentionnés précédemment et aux inconvénients relatifs aux réalisations de l'art antérieur.

L'invention a pour objet, selon l'un de ses aspects, un conducteur thermique pour au moins un double tube sous vide d'un capteur solaire thermique à double tubes sous vide, destiné à être en contact avec un tube collecteur de chaleur, s'étendant à l'intérieur dudit au moins un double tube sous vide, et la paroi interne dudit au moins un double tube sous vide, comprenant un élément absorbeur thermique apte à absorber le rayonnement solaire traversant ledit au moins un double tube sous vide, pour assurer un transfert thermique depuis la paroi interne dudit au moins un double tube sous vide vers le tube collecteur de chaleur,
caractérisé en ce qu'il comporte au moins :
- un premier élément conducteur, comportant une première portion périphérique destinée à s'étendre au moins partiellement au contact de la paroi interne dudit au moins un double tube sous vide et une portion interne, reliée à la première portion périphérique, destinée à s'étendre au moins partiellement au contact du tube collecteur de chaleur, le premier élément conducteur comportant en outre un élément pivot,
- un deuxième élément conducteur, comportant une deuxième portion périphérique destinée à s'étendre au moins partiellement au contact de la paroi interne dudit au moins un double tube sous vide, le deuxième élément conducteur comportant en outre une deuxième portion de connexion avec le premier élément conducteur, la deuxième portion de connexion étant montée en rotation sur l'élément pivot du premier élément conducteur de sorte à permettre le mouvement en rotation du deuxième élément conducteur par rapport au premier élément conducteur,
- un organe de rappel élastique au contact d'au moins le deuxième élément conducteur, apte à exercer une force de rappel élastique sur le deuxième élément conducteur pour l'entraîner en rotation par rapport au premier élément conducteur, au contact de la paroi interne dudit au moins un double tube sous vide.

Par ailleurs, l'invention a également pour objet, selon un autre de ses aspects, un capteur solaire thermique à double tubes sous vide, comprenant une pluralité de double tubes sous vide et un collecteur auquel est connectée la pluralité de double tubes sous vide, au moins un double tube sous vide comportant :
- un tube collecteur de chaleur, s'étendant à l'intérieur du double tube sous vide, connecté audit collecteur,
- un élément absorbeur thermique solidarisé à la paroi interne dudit au moins un double tube sous vide, apte à absorber le rayonnement solaire traversant ledit au moins un double tube sous vide,
- un conducteur thermique tel que défini précédemment, en contact avec le tube collecteur de chaleur et la paroi interne dudit au moins un double tube sous vide, pour assurer un transfert thermique depuis la paroi interne dudit au moins un double tube sous vide vers le tube collecteur de chaleur, lequel transporte alors la chaleur vers ledit collecteur du capteur solaire thermique.

Grâce à l'invention, il peut être possible d'améliorer significativement l'efficacité du transfert thermique au sein d'un double tube sous vide d'un capteur solaire thermique à double tubes sous vide pour récupérer la chaleur issue du rayonnement solaire. L'invention peut notamment permettre de récupérer des tolérances géométriques importantes au niveau du diamètre interne du double tube sous vide, par exemple de l'ordre de plusieurs dixièmes de millimètres. De plus, le conducteur thermique proposé par l'invention peut être facilement assemblé à l'extérieur du double tube sous vide. La présence d'au moins un élément conducteur mobile par rapport à au moins un autre élément conducteur du conducteur thermique peut permettre de former un conducteur thermique ajustable au double tube sous vide dans lequel il est disposé, en particulier dont la plus grande dimension transversale, notamment le diamètre, est adaptable au diamètre interne du double tube sous vide.

Le conducteur thermique et le capteur solaire thermique selon l'invention peuvent en outre comporter l'une ou plusieurs des caractéristiques suivantes prises isolément ou suivant toutes combinaisons techniques possibles.

Les double tubes sous vide, dont ledit au moins un double tube sous vide, sont avantageusement réalisés en verre.

Ledit au moins un double tube sous vide comporte par ailleurs avantageusement un tube extérieur et un tube intérieur entre lesquels est formé un vide. L'élément absorbeur thermique est alors avantageusement disposé au contact de la paroi externe du tube intérieur, se présentant notamment sous la forme d'une couche absorbante recouvrant au moins partiellement la paroi externe du tube intérieur.

Le transport de chaleur vers le collecteur du capteur solaire thermique selon l'invention peut être réalisé selon l'une ou l'autre des deux technologies décrites précédemment, à savoir par flux direct ou par caloduc. Ainsi, le tube collecteur de chaleur peut directement comporter le fluide caloporteur circulant au niveau du collecteur, et se présenter alors notamment sous la forme d'un tube métallique, par exemple en forme de U ou sous forme de double tube constitué par deux tubes concentriques, de sorte à permettre l'aller et le retour du fluide caloporteur depuis le collecteur. En variante, le tube collecteur de chaleur peut se présenter sous la forme d'un caloduc pour transporter la chaleur vers le collecteur, se présentant notamment sous la forme d'un tube entièrement fermé, vide d'air et contenant une petite quantité de fluide, qui est en contact dans le collecteur avec la conduite de fluide caloporteur.

Conformément à l'invention, le conducteur thermique comporte au moins un premier élément conducteur et au moins un deuxième élément conducteur, monté en rotation par rapport au premier élément conducteur. Toutefois, comme il sera décrit par la suite, le conducteur thermique peut comporter une pluralité d'éléments conducteurs, et préférentiellement au moins un premier élément conducteur et au moins deux autres éléments conducteurs montés en rotation par rapport audit au moins un premier élément conducteur. En définitif, toute configuration du conducteur thermique selon l'invention prévoit la présence d'au moins un premier élément conducteur et d'un ou d'une pluralité d'autres éléments conducteurs, mobiles en rotation par rapport audit au moins un premier élément conducteur.

De façon préférée, les éléments conducteurs du conducteur thermique sont obtenus par extrusion ou profilage d'un métal, notamment de l'aluminium ou un alliage bon conducteur.

Par ailleurs, la portion interne du premier élément conducteur peut présenter une forme tubulaire formant le tube collecteur de chaleur, et définissant notamment un caloduc.

Le premier élément conducteur peut encore comporter en section au moins deux portions internes, reliées à la première portion périphérique, présentant une forme tubulaire formant au moins un tube collecteur de chaleur, et définissant notamment un tube en forme de U pour la circulation d'un fluide caloporteur ou au moins deux caloducs.

La ou les portions internes du premier élément conducteur peuvent être centrées ou décentrées par rapport à l'axe longitudinal dudit au moins un double tube sous vide.

Ainsi, de façon avantageuse, la fonction du tube collecteur de chaleur, à savoir la fonction de type caloduc ou la fonction de type flux direct, peut faire partie intégrante de l'un des éléments du conducteur thermique, en particulier le premier élément conducteur. De cette façon, il peut ne pas être nécessaire d'ajouter des pièces complémentaires à la solution proposée, de sorte à entraîner une réduction des coûts et une facilitée de montage. De plus, le contact thermique entre le conducteur thermique et le tube collecteur de chaleur est en conséquence de très bonne qualité.

La ou les portions internes du premier élément conducteur peuvent également comporter intérieurement des reliefs, notamment des rainures et/ou des ailettes.

De façon avantageuse, la présence de tels reliefs au sein de la ou des parois internes peut permettre de favoriser la circulation de fluide sous l'effet de capillarité afin d'assurer un bon fonctionnement du ou des tubes collecteurs de chaleur.

En outre, la ou les portions internes du premier élément conducteur peuvent être reliées à la première portion périphérique du premier élément conducteur par l'intermédiaire d'un ou plusieurs premiers bras de connexion du premier élément conducteur assurant le transfert thermique entre la première portion périphérique et la ou les portions internes.

Le nombre de tels premiers bras de connexion du premier élément conducteur peut être déterminé en fonction notamment du diamètre interne dudit au moins un double tube sous vide et/ou de l'épaisseur de ces premiers bras de connexion. Le premier élément conducteur peut par exemple comporter entre un et six premiers bras de connexion.

De plus, le premier élément conducteur peut avantageusement présenter une plus grande dimension transversale maximale égale au diamètre interne minimal dudit au moins un double tube sous vide.

En outre, l'élément pivot peut présenter une forme cylindrique et peut comporter un méplat pour le montage du deuxième élément conducteur sur l'élément pivot du premier élément conducteur.

Par ailleurs, le premier élément conducteur peut être majoritairement situé dans une première moitié du volume interne dudit au moins un double tube sous vide et le deuxième élément conducteur peut être majoritairement situé dans une deuxième moitié du volume interne dudit au moins un double tube sous vide, les première et deuxième moitiés définissant ensemble le volume interne dudit au moins un double tube sous vide.

Alors, l'axe longitudinal de l'élément pivot peut être situé dans la première moitié du volume interne dudit au moins un double tube sous vide.

De cette façon, il peut être possible d'obtenir un meilleur rattrapage des jeux géométriques.

Par ailleurs, le ou les points de contact entre le deuxième élément conducteur du conducteur thermique et la paroi interne dudit au moins un double tube sous vide peuvent être situés dans la deuxième moitié du volume interne dudit au moins un double tube sous vide.

Afin de faciliter le ou les contacts entre le deuxième élément conducteur et la paroi interne dudit au moins un double tube sous vide et pour que ceux-ci soient réalisés quelles que soient les tolérances du conducteur thermique et dudit au moins un double tube sous vide, la deuxième portion périphérique du deuxième élément conducteur peut être configurée pour assurer ce ou ces contacts avec la paroi interne dudit au moins un double tube sous vide. En particulier, la deuxième portion périphérique du deuxième élément conducteur peut comporter au moins un bossage sur sa surface en vis-à-vis de la paroi interne dudit au moins un double tube sous vide pour venir au contact de la paroi interne dudit au moins un double tube sous vide.

En variante, la deuxième portion périphérique du deuxième élément conducteur peut encore présenter un profil non cylindrique ou un profil comportant une échancrure sur sa partie opposée à la paroi interne dudit au moins un double tube sous vide, réduisant l'épaisseur de la deuxième portion périphérique.

En outre, de façon préférentielle, le premier élément conducteur peut comporter un deuxième élément pivot et le conducteur thermique peut en outre comporter :
- un troisième élément conducteur, comportant une troisième portion périphérique destinée à s'étendre au moins partiellement au contact de la paroi interne dudit au moins un double tube sous vide, le troisième élément conducteur comportant de plus une troisième portion de connexion avec le premier élément conducteur, la troisième portion de connexion étant montée en rotation sur le deuxième élément pivot du premier élément conducteur de sorte à permettre le mouvement en rotation du troisième élément conducteur par rapport au premier élément conducteur.

Alors, l'organe de rappel élastique peut être en appui sur au moins le deuxième élément conducteur et le troisième élément conducteur, apte à exercer une force de rappel élastique sur le deuxième élément conducteur et le troisième élément conducteur pour les entraîner en rotation par rapport au premier élément conducteur et les écarter l'un de l'autre, au contact de la paroi interne dudit au moins un double tube sous vide.

De façon avantageuse, le ou les éléments pivots, notamment le premier élément pivot et/ou le deuxième élément pivot, du premier élément conducteur sont reliés à ladite au moins une portion interne du premier élément conducteur par l'intermédiaire d'un ou plusieurs premiers bras de connexion pivot.

En outre, avantageusement encore, la deuxième portion de connexion et/ou la troisième portion de connexion sont respectivement reliées à la deuxième portion périphérique du deuxième élément conducteur et/ou la troisième portion périphérique du troisième élément conducteur par l'intermédiaire respectivement d'au moins un deuxième bras de connexion et/ d'au moins un troisième bras de connexion.

Par ailleurs, la première portion périphérique du premier élément conducteur, la deuxième portion périphérique du deuxième élément conducteur et/ou la troisième portion périphérique du troisième élément conducteur présentent préférentiellement, en section, une forme sensiblement d'arc de cercle, épousant notamment sensiblement la surface de la paroi interne dudit au moins un double tube sous vide. Par exemple, la première portion périphérique du premier élément conducteur peut présenter, en section, une forme sensiblement de demi-cercle. De même, la deuxième portion périphérique du deuxième élément conducteur et/ou la troisième portion périphérique du troisième élément conducteur peuvent présenter, en section, une forme sensiblement de quart de cercle.

De plus, la deuxième portion de connexion et/ou la troisième portion de connexion peuvent également présenter, en section, une forme sensiblement d'arc de cercle, notamment de demi-cercle, épousant respectivement sensiblement la surface du premier élément pivot et/ou du deuxième élément pivot pour former une liaison pivot.

Par ailleurs, la première portion périphérique du premier élément conducteur peut présenter une longueur longitudinale inférieure à la longueur longitudinale de la ou des portions internes du premier élément conducteur de sorte que la ou les portions internes soient saillantes par rapport à la première portion périphérique du premier élément conducteur à au moins l'une des deux extrémités du premier élément conducteur.

De cette façon, il peut être possible de faciliter les raccordements de la ou des portions internes ainsi isolées longitudinalement du reste du premier élément conducteur.

En outre, comme indiqué précédemment, le conducteur thermique comporte au moins un premier élément conducteur et un ou plusieurs autres éléments conducteurs, ces derniers étant mobiles en rotation par rapport audit au moins un premier élément conducteur. De façon avantageuse, cette mobilité en rotation est assurée par l'intermédiaire du ou des organes de rappel élastique du conducteur thermique.

Cet ou ces organes de rappel élastique peuvent par exemple correspondre à des ressorts. Ils peuvent être de type métallique, étant par exemple réalisés en acier ou en acier inoxydable. De cette façon, le ou les organes de rappel élastique ne perdent avantageusement pas leurs caractéristiques mécaniques et élastiques lors de phases de montée en température.

L'organe de rappel élastique peut par exemple comporter une portion centrale, solidarisée à la portion interne du premier élément conducteur, et au moins une branche apte à être en appui sur un support formé sur la deuxième portion périphérique du deuxième élément conducteur.

L'organe de rappel élastique peut encore comporter un ressort muni d'une pluralité de lamelles agencées sur au moins un support de lamelle d'au moins le deuxième élément conducteur.

En outre, l'organe de rappel élastique peut aussi comporter un ressort plat en appui sur au moins la portion interne du premier élément conducteur et la deuxième portion périphérique du deuxième élément conducteur.

Par ailleurs, l'invention a encore pour objet, selon un autre de ses aspects, une centrale solaire thermique à concentration, caractérisée en ce qu'elle comporte une pluralité de capteurs solaires thermiques à tubes sous vide tels que celui défini précédemment.

Le conducteur thermique, le capteur solaire thermique à tubes sous vide et la centrale solaire thermique à concentration selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 représente, en coupe, un exemple de double tube en verre d'un capteur solaire thermique à double tubes sous vide selon l'art antérieur, utilisant la technologie de transport de chaleur par caloduc,
- la figure 2 représente, en coupe, un exemple de double tube d'un capteur solaire thermique à double tubes sous vide conforme à l'invention,
- la figure 3 représente, en perspective, l'exemple de double tube de la figure 2,
- les figures 4A et 4B sont des vues agrandies de l'exemple de double tube de la figure 1, représentant deux exemples de positionnement du troisième élément conducteur du conducteur thermique du tube sous vide,
- les figures 5A, 5B et 5C illustrent, en coupe, trois étapes d'une séquence de montage du double tube de la figure 2,
- la figure 6 illustre, en perspective, un exemple d'organe de rappel élastique utilisé pour l'exemple de double tube de la figure 2,
- la figure 7 représente, en coupe, une variante de réalisation du double tube de la figure 2 comprenant un autre exemple d'organe de rappel élastique,
- la figure 8 illustre, en perspective, un exemple d'organe de rappel élastique utilisable pour l'exemple de double tube de la figure 7,
- la figure 9 représente, en coupe, une autre variante de réalisation du double tube de la figure 2 comprenant encore un autre exemple d'organe de rappel élastique, et
- les figures 10A et 10B illustrent, en perspective, deux exemples d'organes de rappel élastique utilisables pour l'exemple de double tube de la figure 9.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

La figure 1 a déjà été décrite précédemment dans la partie relative à l'état de la technique antérieure et au contexte technique de l'invention.

Il est par ailleurs à noter que dans tous les exemples de réalisation décrits ci-après en référence aux figures 2 à 10B, l'invention est appliquée de façon nullement limitative à la technologie de capteur solaire thermique 10 à double tubes sous vide à caloduc.

De plus, dans ces exemples de réalisation, on considère que le capteur solaire thermique 10 à double tubes sous vide comprend une pluralité de double tubes sous vide 1 parallèles, tous connectés au collecteur au sein d'une centrale solaire thermique à concentration, c'est-à-dire une pluralité de double tubes sous vide 1 comprenant chacun un tube extérieur la et un tube intérieur 1b (double paroi), comme décrit précédemment en référence à la figure 1.

En outre, par souci de simplification, seul le tube intérieur 1b, en verre, est représenté sur les figures 2, 3, 5A-5C, 7 et 9.

On va ainsi tout d'abord décrire, en référence à la figure 2 (vue en coupe) et à la figure 3 (vue en perspective), un premier exemple de double tube 1 d'un capteur solaire thermique 10 à double tubes sous vide conforme à l'invention.

De façon classique, le tube 1 comporte un tube collecteur de chaleur sous la forme d'un caloduc 3, s'étendant à l'intérieur du tube 1 et étant connecté au collecteur. De plus, le tube 1 comporte un élément absorbeur thermique qui se présente ici sous la forme d'une couche absorbante 2 (ou revêtement sélectif) appliquée sur la paroi externe du tube intérieur 1b. Cette couche absorbante 2 permet d'absorber le rayonnement solaire qui traverse le tube 1. En outre, le tube 1 comporte un conducteur thermique 4, qui se trouve en contact avec le caloduc 3 et la paroi interne du tube intérieur 1b pour assurer le transfert thermique depuis le tube intérieur 1b comprenant la couche absorbante 2 vers le caloduc 3, et ainsi transporter la chaleur obtenue par rayonnement solaire vers le collecteur.

Par ailleurs, conformément à l'invention et comme on peut le voir sur la figure 2, le conducteur thermique 4 est multi-éléments et comporte trois éléments conducteurs 4a, 4b, 4c métalliques ainsi qu'un ressort 5 coopérant avec ces éléments.

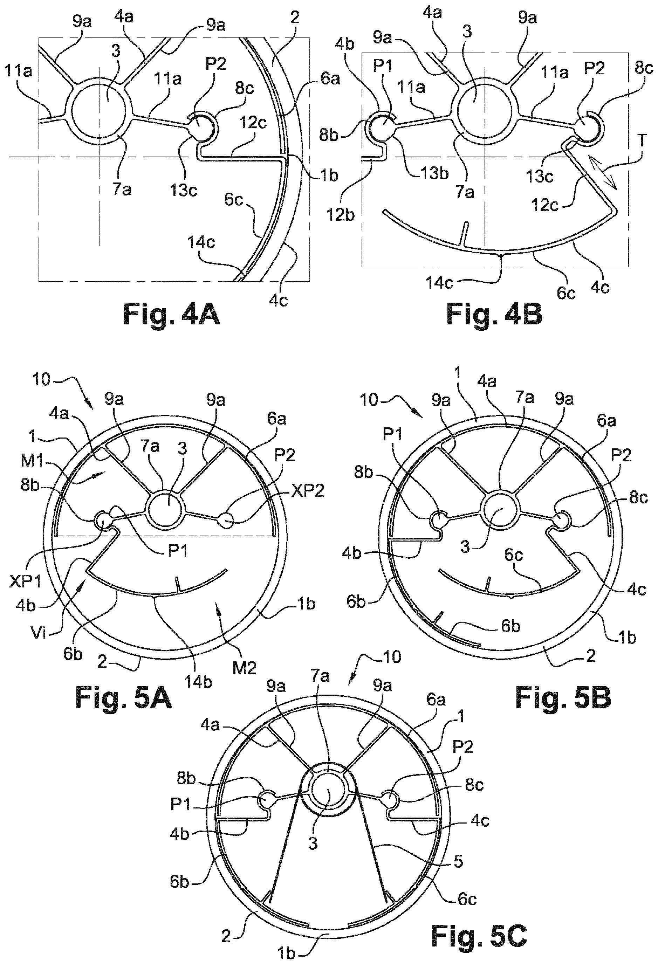

Tout d'abord, le conducteur thermique 4 comporte un premier élément conducteur 4a supérieur, situé dans une première moitié M1 du volume interne Vi du tube intérieur 1b (voir la figure 5A).

Ce premier élément conducteur 4a comporte une première portion périphérique 6a, qui présente en section transversale une forme de demi-cercle de diamètre Da, dont la valeur maximale est égale à la valeur minimale du diamètre interne Di du tube 1. Cette première portion périphérique 6a s'étend au moins partiellement au contact de la paroi interne du tube intérieur 1b. En particulier, la première portion périphérique 6a vient au contact avec la partie supérieure du tube 1b.

De plus, le premier élément conducteur 4a comporte également une portion interne 7a, formant en section transversale un orifice central. Cette portion interne 7a est légèrement décentrée par rapport à l'axe longitudinal du tube 1, comme on peut le voir sur la figure 2. Toutefois, cette position décentrée n'est nullement limitative, comme indiqué auparavant. De plus, cette portion interne 7a forme avantageusement le caloduc 3 du conducteur thermique 4. Ainsi, la fonction caloduc du tube 1 fait partie intégrante du conducteur thermique 4, ce qui évite l'ajout de pièces complémentaires, facilite le montage et permet un transfert thermique de bonne qualité.

La première portion périphérique 6a du premier élément conducteur 4a est par ailleurs reliée à la portion interne 7a par l'intermédiaire de deux premiers bras (ou branches) de connexion 9a du premier élément conducteur 4a de sorte à assurer le transfert thermique entre la première portion périphérique 6a et la portion interne 7a.

En outre, le premier élément conducteur 4a comporte un premier élément pivot P1 et un deuxième élément pivot P2, chacun étant relié à la portion interne 7a par le biais d'un premier bras de connexion pivot 11a. Chacun des premier P1 et deuxième P2 éléments pivots se présente sous une forme cylindrique avec respectivement un méplat 13b et un méplat 13c dont l'utilité sera expliquée par la suite en référence aux figures 4A et 4B.

Par ailleurs, le conducteur thermique 4 comporte encore un deuxième élément conducteur 4b inférieur et un troisième élément conducteur 4c inférieur, montés en rotation par rapport au premier élément conducteur 4a.

Plus précisément, le deuxième élément conducteur 4b et le troisième élément conducteur 4c sont situés dans une deuxième moitié M2 du volume interne Vi du tube intérieur 1b (voir la figure 5A).

Ce deuxième élément conducteur 4b et ce troisième élément conducteur 4c comportent respectivement des deuxième portion périphérique 6b et troisième portion périphérique 6c, qui présentent en section transversale une forme de quart de cercle. Ces deuxième portion périphérique 6b et troisième portion périphérique 6c s'étendent au moins partiellement au contact de la paroi interne du tube intérieur 1b. En particulier, ces deuxième portion périphérique 6b et troisième portion périphérique 6c viennent au contact avec la partie inférieure du tube 1b.

Les deuxième élément conducteur 4b et troisième élément conducteur 4c sont respectivement montés sur les premier P1 et deuxième P2 éléments pivots du premier élément conducteur 4a, de sorte à réaliser des liaisons pivots permettant la rotation des deuxième élément conducteur 4b et troisième élément conducteur 4c relativement au premier élément conducteur 4a.

Pour ce faire, le deuxième élément conducteur 4b comporte une deuxième portion de connexion 8b avec le premier élément conducteur 4a et le troisième élément conducteur 4c comporte une troisième portion de connexion 8c avec le premier élément conducteur 4a.

Les deuxième 8b et troisième 8c portions de connexion sont respectivement reliées à la deuxième portion périphérique 6b du deuxième élément conducteur 4b et à la troisième portion périphérique 6c du troisième élément conducteur 4c par l'intermédiaire respectivement d'un deuxième bras de connexion 12b et d'un troisième bras de connexion 12c. De plus, la deuxième portion de connexion 8b et la troisième portion de connexion 8c présentent, en section transversale, une forme de demi-cercle épousant respectivement la surface du premier élément pivot P1 et la surface du deuxième élément pivot P2.

Ainsi, la deuxième portion de connexion 8b est montée en rotation sur le premier élément pivot P1 du premier élément conducteur 4a de sorte à permettre le mouvement en rotation du deuxième élément conducteur 4b par rapport au premier élément conducteur 4a, et la troisième portion de connexion 8c est également montée en rotation sur le deuxième élément pivot P2 du premier élément conducteur 4a de sorte à permettre le mouvement en rotation du troisième élément conducteur 4c par rapport au premier élément conducteur 4a. Le principe de ce montage en rotation est détaillé par la suite en référence aux figures 5A à 5C.

Enfin, le conducteur thermique 4 comporte également un ressort 5 au contact du premier élément conducteur 4a, du deuxième élément conducteur 4b et du troisième élément conducteur 4c. Ce ressort 5 est avantageusement apte à exercer une force de rappel élastique sur les deuxième élément conducteur 4b et troisième élément conducteur 4c pour les écarter l'un de l'autre et les entraîner en rotation par rapport au premier élément conducteur 4a, de sorte à venir au contact de la paroi interne du tube intérieur 1b.

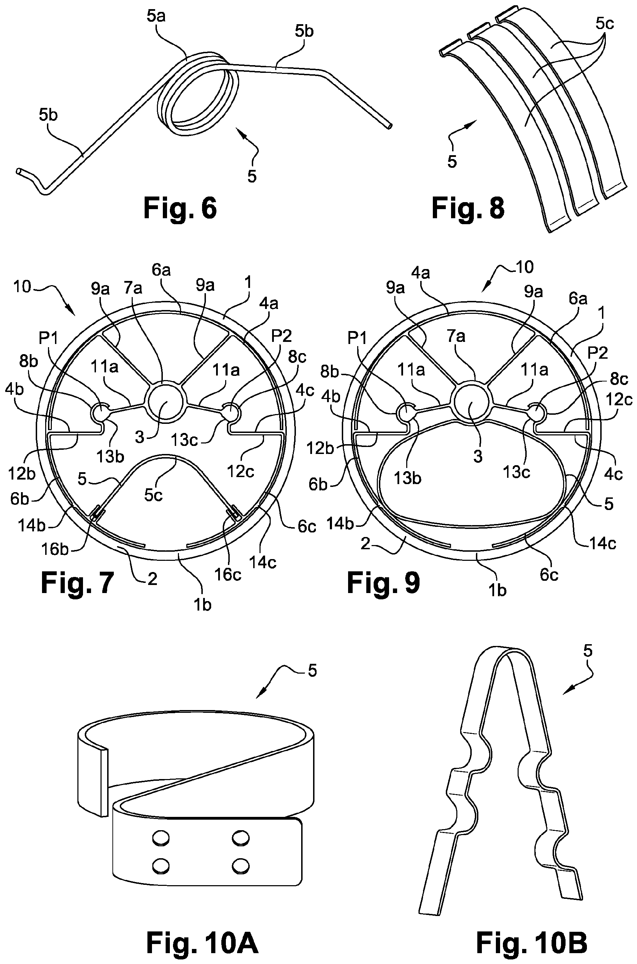

Plus précisément, dans cet exemple, le ressort 5 est semblable à celui représenté sur la figure 6 en perspective. Il comporte ainsi une portion centrale 5a, fixée et enroulée autour de la portion interne 7a du premier élément conducteur 4a, et deux branches 5b partant de cette portion centrale 5a, respectivement en appui contre un support 15b formé sur la deuxième portion périphérique 6b du deuxième élément conducteur 4b et un support 15c formé sur la troisième portion périphérique 6c du troisième élément conducteur 4c.

Le ressort 5 permet alors de provoquer l'écartement des deuxième 4b et troisième 4c éléments conducteurs grâce à leur rotation par rapport aux premier P1 et deuxième P2 éléments pivots, de sorte à les mettre en contact avec la paroi interne du tube intérieur 1b par application respective d'une force de rappel élastique F1 et d'une force de rappel élastique F2, comme représenté sur la figure 2.

Avantageusement, la présence du ressort 5 dans le conducteur thermique 4 du capteur solaire thermique 10 selon l'invention s'explique pour différentes fonctions. Tout d'abord, le ressort 5 permet de maintenir les deuxième 4b et troisième 4c éléments conducteurs inférieurs en position ouverte, c'est-à-dire écartés l'un de l'autre. De plus, le ressort 5 empêche également aux deuxième 4b et troisième 4c éléments conducteurs de se désolidariser des premier P1 et deuxième P2 éléments pivots après montage, autrement dit le ressort 5 permet de maintenir l'ensemble du conducteur thermique 4. Le ressort 5 force également les deuxième 4b et troisième 4c éléments conducteurs à se plaquer contre la paroi interne du tube 1b. Par réaction, le ressort 5 plaque également le premier élément conducteur 4a contre la paroi interne du tube 1b. En effet, l'action des deuxième 4b et troisième 4c éléments conducteurs inférieurs, respectivement selon les forces T2 et T3, contre le tube 1b provoque une contre réaction, selon la force T1, au niveau du premier élément conducteur supérieur 4a.

Toutefois, afin de s'assurer que les efforts T2 et T3 soient bien orientés vers le bas, pour pouvoir plaquer le premier élément conducteur 4a vers le haut (l'orientation correspondant à celle de la figure 2), il faut pouvoir avoir un point de contact entre le tube 1b et les deuxième 4b et troisième 4c éléments conducteurs inférieurs qui soit localisé dans la deuxième moitié M2 du volume interne Vi du tube 1b (voir la figure 5A).

Plus précisément, en considérant le centre O sur la figure 2, situé sur l'axe longitudinal du tube 1, comme l'origine d'un repère (Oxyz), le point de contact entre le tube 1b et les deuxième 4b et troisième 4c éléments conducteurs inférieurs est préférentiellement situé à une ordonnée comprise entre 0,2^{∗}(Di/2) et Di/2.

Néanmoins, pour que cette contrainte de valeur soit réalisée quelles que soient les tolérances du tube 1 et des éléments conducteurs 4a, 4b et 4c, la deuxième portion périphérique 6b du deuxième élément conducteur 4b et la troisième portion périphérique 6c du troisième élément conducteur 4c peuvent être configurées pour assurer le contact avec le tube 1. Ainsi, il peut être envisagé d'avoir des deuxième 4b et troisième 4c éléments conducteurs de forme non cylindrique ou alors comportant une échancrure sur leur partie supérieure, sur une zone d'ordonnée comprise entre 0 et 0,2^{∗}Di.

En variante, comme selon l'exemple de l'invention de la figure 2, la deuxième portion périphérique 6b du deuxième élément conducteur 4b peut comporter un bossage 14b sur sa surface en vis-à-vis de la paroi interne du tube intérieur 1b pour venir à son contact. De même, la troisième portion périphérique 6c du troisième élément conducteur 4c peut comporter un bossage 14c sur sa surface en vis-à-vis de la paroi interne du tube intérieur 1b pour venir à son contact.

Par ailleurs, comme on peut le voir sur la figure 3, la première portion périphérique 6a du premier élément conducteur 4a présente une longueur longitudinale L1 qui est inférieure à la longueur longitudinale L2 de la portion interne 7a du premier élément conducteur 4a. Autrement dit, à au moins des deux extrémités du premier élément conducteur 4a, il est possible de procéder un enlèvement de matière E, notamment par usinage, afin de ne conserver à cet endroit que la portion interne 7a, sous la forme d'un tube métallique, notamment en aluminium, de forme cylindrique. Ainsi, la portion interne 7a est saillante par rapport à la première portion périphérique 6a du premier élément conducteur 4a.

De cette façon, la géométrie cylindrique de la portion interne 7a permet de faire des raccordements aisés pour finaliser la réalisation du caloduc 3. Il peut ainsi par exemple être possible d'utiliser facilement toute technologie usuelle de raccordement d'un tube cylindrique, et par exemple de braser ou de souder un bouchon, un raccord, entre autres.

Par ailleurs, les figures 4A et 4B sont des vues agrandies de l'exemple de double tube 1 de la figure 1, représentant deux exemples de positionnement du troisième élément conducteur 4c du conducteur thermique 4 du tube sous vide 1.

En effet, les tubes sous vide 1 en verre peuvent avoir une longueur importante, par exemple de l'ordre de 2 m. Aussi, afin de permettre un montage facile des deuxième 4b et troisième 4c éléments conducteurs sur le premier élément conducteur 4a, il est avantageux de prévoir des méplats 13b et 13c sur les éléments pivots P1 et P2.

Plus spécifiquement, le premier élément pivot P1 comporte un méplat 13b pour faciliter le montage du deuxième élément conducteur 4b, et le deuxième élément pivot P2 comporte un méplat 13c pour faciliter le montage du troisième élément conducteur 4c.

Ainsi, par exemple, lorsque le troisième élément conducteur 4c est en position repliée (cas de la figure 4B), il est possible de monter ce troisième élément conducteur 4c sur le premier élément conducteur 4a par une simple translation T, typiquement de l'ordre de quelques millimètres. De cette façon, on évite d'avoir à faire coulisser le premier élément conducteur 4a et le troisième élément conducteur 4c sur une longueur d'environ 2 m. Il est alors possible de limiter les jeux entre le premier élément conducteur 4a et les deuxième 4b et troisième 4c éléments conducteurs au niveau des premier P1 et deuxième P2 éléments pivots, ce qui est favorable pour le contact thermique.

En outre, lorsque le troisième élément conducteur 4c est en position ouverte (cas de la figure 4A), le mouvement de translation n'est plus possible de sorte que le premier élément conducteur 4a et le troisième élément conducteur 4c sont solidaires l'un par rapport à l'autre, pouvant néanmoins pivoter avec un angle faible autour de la liaison pivot de sorte à pouvoir mettre en contact le troisième élément conducteur 4c inférieur avec la paroi interne du tube sous vide 1, autrement dit la paroi interne du tube intérieur 1b.

Par ailleurs, les figures 5A, 5B et 5C illustrent, en coupe, trois étapes d'une séquence de montage du double tube 1 de la figure 2.

Tout d'abord, comme on peut le voir sur la figure 5A, afin que les deuxième 4b et troisième 4c éléments conducteurs puissent s'écarter du tube 1 lorsqu'ils sont en position repliée, on prévoit d'avoir l'axe longitudinal XP1 du premier élément pivot P1 et l'axe longitudinal XP2 du deuxième élément pivot P2 qui soient situés dans la première moitié M1 du volume interne Vi du tube sous vide 1. Autrement dit, les axes longitudinaux XP1 et XP2 sont situés au-dessus de l'axe longitudinal du tube sous vide 1. Cette position permet un meilleur rattrapage des jeux au niveau des différents diamètres.

La séquence de montage peut ainsi être la suivante : au cours d'une étape telle que représentée sur la figure 5A, on procède au montage du deuxième élément conducteur 4b par translation transversale en position repliée à l'aide du méplat 13b présent sur le premier élément pivot P1; au cours d'une étape telle que représentée sur la figure 5B, on procède de la même façon pour le troisième élément conducteur 4c à l'aide du méplat 13c présent sur le deuxième élément pivot P2 ; puis au cours d'une étape telle que celle représentée sur la figure 5C, on procède au montage du ressort 5.

Ces étapes peuvent avantageusement être réalisées à l'extérieur du tube sous vide 1. Une fois le montage terminé, on peut alors placer l'ensemble du conducteur thermique 4 à l'intérieur du tube sous vide 1.

La figure 7 représente, en coupe, une variante de réalisation du double tube 1 de la figure 2 comprenant un autre exemple d'organe de rappel élastique.

Dans cet exemple, le ressort 5 se présente sous la forme d'un ressort muni d'une pluralité de lamelles 5c clipsées sur un support de lamelle 16b du deuxième élément conducteur 4b et un support de lamelle 16c du troisième élément conducteur 4c. Dans ce cas, le ressort 5 n'est pas au contact du premier élément conducteur 4a.

La figure 8 illustre, en perspective, un tel exemple de ressort 5 pourvu de lamelles 5c.

Par ailleurs, la figure 9 représente, en coupe, encore une autre variante de réalisation du double tube 1 de la figure 2 comprenant encore un autre exemple d'organe de rappel élastique.

Dans cet exemple, le ressort 5 est un ressort plat en appui contre la portion interne 7a du premier élément conducteur 4a et contre les portions périphériques 6a et 6b respectivement des deuxième 4b et troisième 4c éléments conducteurs.

Les figures 10A et 10B illustrent ainsi, en perspective, deux exemples de ressorts plats utilisables pour l'exemple de double tube 1 de la figure 9.

Il est à noter que dans les exemples précédemment décrits, les premier 4a, deuxième 4b et troisième 4c éléments conducteurs peuvent notamment être obtenus par extrusion ou profilage d'un métal, notamment de l'aluminium ou un alliage bon conducteur thermique.

De façon avantageuse, le conducteur thermique 4 du capteur solaire thermique 10 selon l'invention peut être totalement démontable, même après plusieurs années de fonctionnement. Il peut alors être facile de séparer le ou les ressorts 5 des éléments conducteurs 4a, 4b, 4c, et ainsi d'assurer un recyclage efficace des éléments conducteurs de sorte à réduire l'impact environnemental du capteur 10.

Bien entendu, l'invention n'est pas limitée aux exemples de réalisation qui viennent d'être décrits. Diverses modifications peuvent y être apportées par l'homme du métier.

En particulier, quand bien même les exemples donnés ci-dessus correspondent à la technologie de capteur solaire thermique à tubes sous vide à caloduc, l'invention est bien entendu applicable à la technologie de capteur solaire thermique à tubes sous vide à flux direct (ou circulation directe) telle que décrite précédemment.

Par ailleurs, dans les exemples décrits ci-dessus, le premier élément conducteur 4a comporte une seule portion interne 7a de forme tubulaire, formant un caloduc. En variante, le premier élément conducteur 4a pourrait comporter une pluralité de portions internes de forme tubulaire formant une pluralité de caloducs ou de tubes en forme de U pour un transport de chaleur à flux direct.

De plus, il pourrait être envisageable de supprimer un des deuxième 4b et troisième 4c éléments conducteurs, en ne conservant alors, en plus du premier élément conducteur 4a, qu'un seul autre deuxième élément conducteur 4b qui serait de taille plus grande afin de venir au contact de la demi-périphérie inférieure du tube intérieur 1b. Alors, les branches 5b du ressort 5 pourraient venir en appui entre les premier 4a et deuxième 4b éléments conducteurs pour provoquer leur écartement.

En outre, bien que non représenté dans tous les exemples envisagés ci-dessus, la portion interne 7a formant le caloduc 3 pourrait comporter intérieurement des reliefs, et par exemple des rainures et/ou des ailettes, afin de favoriser la circulation de fluide sous l'effet de capillarité pour permettre le bon fonctionnement du caloduc 3.

De plus, les épaisseurs, le nombre de bras 9a, 11a, 12b, 12c et/ou les sections de chaque élément conducteur 4a, 4b, 4c peuvent être optimisés en fonction du diamètre interne Di du tube sous vide 1, et également du flux incident afin d'assurer un bon transfert thermique tout en optimisant la masse totale du conducteur thermique 4.

Le fluide utilisé dans le caloduc 3 est avantageusement adapté au matériau de la portion interne 7a, soit au matériau du premier élément conducteur 4a. Dans le cas d'un premier élément conducteur 4a réalisé en aluminium, le fluide utilisé peut par exemple être de l'acétone ou un alcane.

Par ailleurs, pour le cas d'applications où le flux solaire n'irradie que la partie supérieure du tube sous vide 1, les éléments conducteurs inférieurs 4b et 4c peuvent ne plus avoir un rôle de transfert thermique. Dans ce cas, il peut ne pas être utile d'avoir des éléments conducteurs inférieurs 4b, 4c ayant une longueur proche de celle de l'élément conducteur supérieur 4a. On peut dans ce cas utiliser plusieurs éléments conducteurs inférieurs, par exemple de 2 à 5, de faible longueur, par exemple comprise entre 30 et 100 mm, par exemple régulièrement répartis sur la longueur de l'élément conducteur supérieur 4a et permettant d'assurer la fonction d'élasticité et de placage de l'élément conducteur supérieur 4a contre le tube sous vide 1. La réduction des longueurs des éléments conducteurs inférieurs peut permettre en outre de diminuer l'inertie totale du capteur solaire thermique 10.

De façon générale, l'invention peut être appliquée à toute centrale solaire thermique à concentration utilisant des double tubes sous vide, notamment en verre, pourvus d'un absorbeur thermique, lorsqu'il est nécessaire d'assurer un transfert thermique entre les double tubes sous vide recevant l'absorbeur thermique et un fluide caloporteur situé ou non dans un tube collecteur de chaleur.

## Revendications

1. Conducteur thermique (4) pour au moins un double tube sous vide (1) d'un capteur solaire thermique (10) à double tubes sous vide, destiné à être en contact avec un tube collecteur de chaleur (3), s'étendant à l'intérieur dudit au moins un double tube sous vide (1), et la paroi interne dudit au moins un double tube sous vide (1), ledit conducteur thermique (4) comprenant un élément absorbeur thermique (2) apte à absorber le rayonnement solaire traversant ledit au moins un double tube sous vide (1), pour assurer un transfert thermique depuis la paroi interne dudit au moins un double tube sous vide (1) vers le tube collecteur de chaleur (3),
**caractérisé en ce qu'**il comporte au moins :
- un premier élément conducteur (4a), comportant une première portion périphérique (6a) destinée à s'étendre au moins partiellement au contact de la paroi interne dudit au moins un double tube sous vide (1) et une portion interne (7a), reliée à la première portion périphérique (6a), destinée à s'étendre au moins partiellement au contact du tube collecteur de chaleur (3), le premier élément conducteur (4a) comportant en outre un élément pivot (P1),
- un deuxième élément conducteur (4b), comportant une deuxième portion périphérique (6b) destinée à s'étendre au moins partiellement au contact de la paroi interne dudit au moins un double tube sous vide (1), le deuxième élément conducteur (4b) comportant en outre une deuxième portion de connexion (8b) avec le premier élément conducteur (4a), la deuxième portion de connexion (8b) étant montée en rotation sur l'élément pivot (P1) du premier élément conducteur (4a) de sorte à permettre le mouvement en rotation du deuxième élément conducteur (4b) par rapport au premier élément conducteur (4a),
- un organe de rappel élastique (5) au contact d'au moins le deuxième élément conducteur (4b), apte à exercer une force de rappel élastique sur le deuxième élément conducteur (4b) pour l'entraîner en rotation par rapport au premier élément conducteur (4a), au contact de la paroi interne dudit au moins un double tube sous vide (1).

2. Conducteur thermique selon la revendication 1, **caractérisé en ce que** la portion interne (7a) du premier élément conducteur (4a) présente une forme tubulaire formant le tube collecteur de chaleur (3), et définissant notamment un caloduc.

3. Conducteur thermique selon la revendication 1, **caractérisé en ce que** le premier élément conducteur (4a) comporte en section au moins deux portions internes, reliées à la première portion périphérique (6a), présentant une forme tubulaire formant au moins un tube collecteur de chaleur (3), et définissant notamment un tube en forme de U pour la circulation d'un fluide caloporteur ou au moins deux caloducs, la ou les portions internes (7a) du premier élément conducteur (4a) comportant notamment intérieurement des reliefs, notamment des rainures et/ou des ailettes.

4. Conducteur thermique selon l'une quelconque des revendications précédentes, **caractérisé en ce que** la ou les portions internes (7a) du premier élément conducteur (4a) sont reliées à la première portion périphérique (6a) du premier élément conducteur (4a) par l'intermédiaire d'un ou plusieurs premiers bras de connexion (9a) du premier élément conducteur (4a) assurant le transfert thermique entre la première portion périphérique (6a) et la ou les portions internes (7a).

5. Conducteur thermique selon l'une quelconque des revendications précédentes, **caractérisé en ce que** l'élément pivot (P1) présente une forme cylindrique et comporte un méplat (13b) pour le montage du deuxième élément conducteur (4b) sur l'élément pivot (P1) du premier élément conducteur (4a).

6. Conducteur thermique selon l'une quelconque des revendications précédentes, **caractérisé en ce que** le premier élément conducteur (4a) comporte un deuxième élément pivot (P2) et **en ce que** le conducteur thermique (4) comporte en outre :
- un troisième élément conducteur (4c), comportant une troisième portion périphérique (6c) destinée à s'étendre au moins partiellement au contact de la paroi interne dudit au moins un double tube sous vide (1), le troisième élément conducteur (4c) comportant de plus une troisième portion de connexion (8c) avec le premier élément conducteur (4a), la troisième portion de connexion (8c) étant montée en rotation sur le deuxième élément pivot (P2) du premier élément conducteur (4a) de sorte à permettre le mouvement en rotation du troisième élément conducteur (4c) par rapport au premier élément conducteur (4a),
l'organe de rappel élastique (5) étant en appui sur au moins le deuxième élément conducteur (4b) et le troisième élément conducteur (4c), apte à exercer une force de rappel élastique sur le deuxième élément conducteur (4b) et le troisième élément conducteur (4c) pour les entraîner en rotation par rapport au premier élément conducteur (4a) et les écarter l'un de l'autre, au contact de la paroi interne dudit au moins un double tube sous vide (1).

7. Conducteur thermique selon l'une quelconque des revendications précédentes, **caractérisé en ce que** la première portion périphérique (6a) du premier élément conducteur (4a) présente une longueur longitudinale (L1) inférieure à la longueur longitudinale (L2) de la ou des portions internes (7a) du premier élément conducteur (4a) de sorte que la ou les portions internes (7a) soient saillantes par rapport à la première portion périphérique (6a) du premier élément conducteur (4a) à au moins l'une des deux extrémités du premier élément conducteur (4a).

8. Conducteur thermique selon l'une quelconque des revendications précédentes, **caractérisé en ce que** l'organe de rappel élastique (5) comporte :
- une portion centrale (5a), solidarisée à la portion interne (7a) du premier élément conducteur (4a), et au moins une branche (5b) apte à être en appui sur un support (15b) formé sur la deuxième portion périphérique (6b) du deuxième élément conducteur (4b),
ou,
- un ressort muni d'une pluralité de lamelles (5c) agencées sur au moins un support de lamelle (16b) d'au moins le deuxième élément conducteur (4b),
ou,
- un ressort plat en appui sur au moins la portion interne (7a) du premier élément conducteur (4a) et la deuxième portion périphérique (6b) du deuxième élément conducteur (6b).

9. Capteur solaire thermique (10) à double tubes sous vide, comprenant une pluralité de double tubes sous vide (1) et un collecteur auquel est connectée la pluralité de double tubes sous vide (1), au moins un double tube sous vide (1) comportant :
- un tube collecteur de chaleur (3), s'étendant à l'intérieur du double tube sous vide (1), connecté audit collecteur,
- un élément absorbeur thermique (2) solidarisé à la paroi interne dudit au moins un double tube sous vide (1), apte à absorber le rayonnement solaire traversant ledit au moins un double tube sous vide (1),
- un conducteur thermique (4) selon l'une quelconque des revendications précédentes, en contact avec le tube collecteur de chaleur (3) et la paroi interne dudit au moins un double tube sous vide (1), pour assurer un transfert thermique depuis la paroi interne dudit au moins un double tube sous vide (1) vers le tube collecteur de chaleur (3), lequel transporte alors la chaleur vers ledit collecteur du capteur solaire thermique (10).

10. Capteur selon la revendication 9, **caractérisé en ce que** ledit au moins un double tube sous vide (1) comporte un tube extérieur (1a) et un tube intérieur (1b) entre lesquels est formé un vide (V), l'élément absorbeur thermique (2) étant disposé au contact de la paroi externe du tube intérieur (1b), se présentant notamment sous la forme d'une couche absorbante (2) recouvrant au moins partiellement la paroi externe du tube intérieur (1b).

11. Capteur selon la revendication 9 ou 10, **caractérisé en ce que** le premier élément conducteur (4a) présente une plus grande dimension transversale (Da) maximale égale au diamètre interne (Di) minimal dudit au moins un double tube sous vide (1).

12. Capteur selon l'une des revendications 9 à 11 **caractérisé en ce que** le premier élément conducteur (4a) est majoritairement situé dans une première moitié (M1) du volume interne (Vi) dudit au moins un double tube sous vide (1) et **en ce que** le deuxième élément conducteur (4b) est majoritairement situé dans une deuxième moitié (M2) du volume interne (Vi) dudit au moins un double tube sous vide (1), les première (M1) et deuxième (M2) moitiés définissant ensemble le volume interne (Vi) dudit au moins un double tube sous vide (1), l'axe longitudinal (XP1) de l'élément pivot (P1) étant situé dans la première moitié (M1) du volume interne (Vi) dudit au moins un double tube sous vide (1).

13. Capteur selon l'une quelconque des revendications 9 à 12, **caractérisé en ce que** le premier élément conducteur (4a) est majoritairement situé dans une première moitié (M1) du volume interne (Vi) dudit au moins un double tube sous vide (1) et **en ce que** le deuxième élément conducteur (4b) est majoritairement situé dans une deuxième moitié (M2) du volume interne (Vi) dudit au moins un double tube sous vide (1), les première (M1) et deuxième (M2) moitiés définissant ensemble le volume interne (Vi) dudit au moins un double tube sous vide (1), le ou les points de contact entre le deuxième élément conducteur (4b) du conducteur thermique (4) et la paroi interne dudit au moins un double tube sous vide (1) étant situés dans la deuxième moitié (M2) du volume interne (Vi) dudit au moins un double tube sous vide (1).

14. Capteur selon la revendication 13, **caractérisé en ce que** la deuxième portion périphérique (6b) du deuxième élément conducteur (4b) comporte au moins un bossage (14b) sur sa surface en vis-à-vis la paroi interne dudit au moins un double tube sous vide (1) pour venir au contact de la paroi interne dudit au moins un double tube sous vide (1).

15. Centrale solaire thermique à concentration, **caractérisée en ce qu'**elle comporte une pluralité de capteurs solaires thermiques (10) à double tubes sous vide selon l'une quelconque des revendications 9 à 14.

## Patentansprüche

1. Wärmeleiter (4) für mindestens eine Doppelvakuumröhre (1) eines Doppelvakuumröhren-Solarthermiekollektors (10), der dazu bestimmt ist, mit einem Wärmekollektorrohr (3), das sich innerhalb der zumindest einen Doppelvakuumröhre (1) erstreckt, und der Innenwand der zumindest einen Doppelvakuumröhre (1) in Kontakt zu stehen, wobei der Wärmeleiter (4) ein Wärmeabsorptionselement (2) enthält, das dazu geeignet ist, Sonnenstrahlung zu absorbieren, die durch die zumindest eine Doppelvakuumröhre (1) tritt, um einen Wärmeübergang von der Innenwand der zumindest einen Doppelvakuumröhre (1) zu dem Wärmekollektorrohr (3) sicherzustellen,
**dadurch gekennzeichnet, dass** er zumindest enthält:
- ein erstes leitendes Element (4a), das einen ersten Umfangsabschnitt (6a) enthält, der dazu bestimmt ist, sich zumindest teilweise in Kontakt mit der Innenwand der zumindest einen Doppelvakuumröhre (1) zu erstrecken, sowie einen Innenabschnitt (7a), der mit dem ersten Umfangsabschnitt (6a) verbunden und dazu bestimmt ist, sich zumindest teilweise in Kontakt mit dem Wärmekollektorrohr (3) zu erstrecken, wobei das erste leitende Element (4a) ferner ein Schwenkelement (P1) enthält,
- ein zweites leitendes Element (4b), das einen zweiten Umfangsabschnitt (6b) enthält, der dazu bestimmt ist, sich zumindest teilweise in Kontakt mit der Innenwand der zumindest einen Doppelvakuumröhre (1) zu erstrecken, wobei das zweite leitende Element (4b) ferner einen zweiten Verbindungsabschnitt (8b) zur Verbindung mit dem ersten leitenden Element (4a) enthält, wobei der zweite Verbindungsabschnitt (8b) drehbar an dem Schwenkelement (P1) des ersten leitenden Elements (4a) angebracht ist, so dass sich das zweite leitende Element (4b) relativ zum ersten leitenden Element (4a) drehen kann,
- ein elastisches Rückstellorgan (5) in Kontakt mit zumindest dem zweiten leitenden Element (4b), das dazu geeignet ist, eine elastische Rückstellkraft auf das zweite leitende Element (4b) auszuüben, um es in Kontakt mit der Innenwand der zumindest einen Doppelvakuumröhre (1) bezüglich des ersten leitenden Elements (4a) in Drehung zu versetzen.

2. Wärmeleiter nach Anspruch 1, **dadurch gekennzeichnet, dass** der Innenabschnitt (7a) des ersten leitenden Elements (4a) eine Röhrenform aufweist, welche das Wärmekollektorrohr (3) bildet und insbesondere ein Wärmerohr definiert.

3. Wärmeleiter nach Anspruch 1, **dadurch gekennzeichnet, dass** das erste leitende Element (4a) im Querschnitt zumindest zwei Innenabschnitte enthält, die mit dem ersten Umfangsabschnitt (6a) verbunden sind, eine Röhrenform aufweisen, welche zumindest ein Wärmekollektorrohr (3) bildet, und insbesondere ein U-förmiges Rohr für die Zirkulation eines Wärmeträgerfluids oder zumindest zwei Wärmerohre definieren, wobei der bzw. die Innenabschnitte (7a) des ersten leitenden Elements (4a) insbesondere innen Reliefformen, insbesondere Nuten und/oder Rippen, aufweist bzw. aufweisen.

4. Wärmeleiter nach einem der vorangehenden Ansprüche, **dadurch gekennzeichnet, dass** der bzw. die Innenabschnitte (7a) des ersten leitenden Elements (4a) mit dem ersten Umfangsabschnitt (6a) des ersten leitenden Elements (4a) über einen oder mehrere Verbindungsarme (9a) des ersten leitenden Elements (4a) verbunden sind, wodurch der Wärmeübergang zwischen dem ersten Umfangsabschnitt (6a) und dem bzw. den Innenabschnitten (7a) sichergestellt wird.

5. Wärmeleiter nach einem der vorangehenden Ansprüche, **dadurch gekennzeichnet, dass** das Schwenkelement (P1) eine zylindrische Form hat und eine Abflachung (13b) zum Anbringen des zweiten leitenden Elements (4b) an das Schwenkelement (P1) des ersten leitenden Elements (4a) aufweist.

6. Wärmeleiter nach einem der vorangehenden Ansprüche, **dadurch gekennzeichnet, dass** das erste leitende Element (4a) ein zweites Schwenkelement (P2) enthält und dass der Wärmeleiter (4) ferner enthält:
- ein drittes leitendes Element (4c), das einen dritten Umfangsabschnitt (6c) enthält, der dazu bestimmt ist, sich zumindest teilweise in Kontakt mit der Innenwand der zumindest einen Doppelvakuumröhre (1) zu erstrecken, wobei das dritte leitende Element (4c) ferner einen dritten Verbindungsabschnitt (8c) zur Verbindung mit dem ersten leitenden Element (4a) enthält, wobei der dritte Verbindungsabschnitt (8c) drehbar an dem zweiten Schwenkelement (P2) des ersten leitenden Elements (4a) angebracht ist, so dass sich das dritte leitende Element (4c) relativ zum ersten leitenden Element (4a) drehen kann,
wobei das elastische Rückstellorgan (5) in Anlage zumindest an dem zweiten leitenden Element (4b) und dem dritten leitenden Element (4c) und dazu geeignet ist, eine elastische Rückstellkraft auf das zweite leitende Element (4b) und auf das dritte leitende Element (4c) auszuüben, um sie in Kontakt mit der Innenwand der zumindest einen Doppelvakuumröhre (1) bezüglich des ersten leitenden Elements (4a) in Drehung zu versetzen und sie voneinander zu beabstanden.

7. Wärmeleiter nach einem der vorangehenden Ansprüche, **dadurch gekennzeichnet, dass** der erste Umfangsabschnitt (6a) des ersten leitenden Elements (4a) eine longitudinale Länge (L1) aufweist, die geringer als die longitudinale Länge (L2) des bzw. der Innenabschnitte (7a) des ersten leitenden Elements (4a) ist, so dass der bzw. die Innenabschnitte (7a) bezüglich des ersten Umfangsabschnitts (6a) des ersten leitenden Elements (4a) an zumindest einem der beiden Enden des ersten leitenden Elements (4a) vorspringen.

8. Wärmeleiter nach einem der vorangehenden Ansprüche, **dadurch gekennzeichnet, dass** das elastische Rückstellorgan (5) enthält:
- einen Mittelabschnitt (5a), der fest mit dem Innenabschnitt (7a) des ersten leitenden Elements (4a) verbunden ist, und zumindest einen Schenkel (5b), der dazu geeignet ist, in Anlage an einem Träger (15b) zu sein, der an dem zweiten Umfangsabschnitt (6b) des zweiten leitenden Elements (4b) ausgebildet ist,
oder
- eine Feder, die mit einer Mehrzahl von Lamellen (5c) versehen ist, die an zumindest einem Lamellenträger (16b) von zumindest dem zweiten leitenden Element (4b) angeordnet sind,
- eine Flachfeder in Anlage an zumindest dem Innenabschnitt (7a) des ersten leitenden Elements (4a) und dem zweiten Umfangsabschnitt (6b) des zweiten leitenden Elements (6b).

9. Doppelvakuumröhren-Solarthermiekollektor (10), enthaltend eine Mehrzahl von Doppelvakuumröhren (1) und einen Kollektor, mit dem die Mehrzahl von Doppelvakuumröhren (1) verbunden ist, wobei zumindest eine Doppelvakuumröhre (1) enthält:
- ein Wärmekollektorrohr (3), das sich innerhalb der Doppelvakuumröhre (1) erstreckt und mit dem Kollektor verbunden ist,
- ein Wärmeabsorptionselement (2), das fest mit der Innenwand der zumindest einen Doppelvakuumröhre (1) verbunden und dazu geeignet ist, Sonnenstrahlung zu absorbieren, die durch die zumindest eine Doppelvakuumröhre (1) tritt,
- einen Wärmeleiter (4) nach einem der vorangehenden Ansprüche, der in Kontakt mit dem Wärmekollektorrohr (3) und der Innenwand der zumindest einen Doppelvakuumröhre (1) steht, um einen Wärmeübergang von der Innenwand der zumindest einen Doppelvakuumröhre (1) zu dem Wärmekollektorrohr (3) sicherzustellen, das dann die Wärme zu dem Kollektor des Solarthermiekollektors (10) leitet.

10. Kollektor nach Anspruch 9, **dadurch gekennzeichnet, dass** die zumindest eine Doppelvakuumröhre (1) eine Außenröhre (1a) und eine Innenröhre (1b) enthält, zwischen denen ein Vakuum (V) gebildet ist, wobei das Wärmeabsorptionselement (2) in Kontakt mit der Außenwand der Innenröhre (1b) angeordnet ist und insbesondere in Form einer Absorptionsschicht (2) vorliegt, die zumindest teilweise die Außenwand der Innenröhre (1b) bedeckt.

11. Kollektor nach Anspruch 9 oder 10, **dadurch gekennzeichnet, dass** das erste leitende Element (4a) eine größere maximale Querabmessung (Da) aufweist, die gleich dem minimalen Innendurchmesser (Di) der zumindest einen Doppelvakuumröhre (1) ist.

12. Kollektor nach einem der Ansprüche 9 bis 11, **dadurch gekennzeichnet, dass** das erste leitende Element (4a) überwiegend in einer ersten Hälfte (M1) des Innenvolumens (Vi) der zumindest einen Doppelvakuumröhre (1) liegt und dass das zweite leitende Element (4b) überwiegend in einer zweiten Hälfte (M2) des Innenvolumens (Vi) der zumindest einen Doppelvakuumröhre (1) liegt, wobei die erste (M1) und die zweite (M2) Hälfte zusammen das Innenvolumen (Vi) der zumindest einen Doppelvakuumröhre (1) definieren, wobei die Längsachse (XP1) des Schwenkelements (P1) in der ersten Hälfte (M1) des Innenvolumens (Vi) der zumindest einen Doppelvakuumröhre (1) liegt.

13. Kollektor nach einem der Ansprüche 9 bis 12, **dadurch gekennzeichnet, dass** das erste leitende Element (4a) überwiegend in einer ersten Hälfte (M1) des Innenvolumens (Vi) der zumindest einen Doppelvakuumröhre (1) liegt und dass das zweite leitende Element (4b) überwiegend in einer zweiten Hälfte (M2) des Innenvolumens (Vi) der zumindest einen Doppelvakuumröhre (1) liegt, wobei die erste (M1) und die zweite (M2) Hälfte zusammen das Innenvolumen (Vi) der zumindest einen Doppelvakuumröhre (1) definieren, wobei der bzw. die Kontaktpunkte zwischen dem zweiten leitenden Element (4b) des Wärmeleiters (4) und der Innenwand der zumindest einen Doppelvakuumröhre (1) in der zweiten Hälfte (M2) des Innenvolumens (Vi) der zumindest einen Doppelvakuumröhre (1) liegt bzw. liegen.

14. Kollektor nach Anspruch 13, **dadurch gekennzeichnet, dass** der zweite Umfangsabschnitt (6b) des zweiten leitenden Elements (4b) zumindest eine Erhebung (14b) an seiner der Innenwand der zumindest einen Doppelvakuumröhre (1) gegenüberliegenden Fläche aufweist, um mit der Innenwand der zumindest einen Doppelvakuumröhre (1) in Kontakt zu gelangen.

15. Solarthermiekraftwerk mit Strahlungsbündelung, **dadurch gekennzeichnet, dass** es eine Vielzahl von Solarthermiekollektoren (10) mit Doppelvakuumröhren nach einem der Ansprüche 9 bis 14 enthält.

## Claims

1. A thermal conductor (4) for at least one double vacuum tube (1) of a solar thermal collector (10) with double vacuum tubes, intended to be in contact with a heat-collecting tube (3), extending inside said at least one double vacuum tube (1), and the inner wall of said at least one double vacuum tube (1), said thermal conductor (4) comprising a heat-absorbing element (2) able to absorb the solar radiation passing through said at least one double vacuum tube (1), to ensure thermal transfer from the inner wall of said at least one double vacuum tube (1) to the heat-collecting tube (3),
**characterized in that** it includes at least:
- a first conductive element (4a), including a first peripheral portion (6a) intended to extend at least partially in contact with the inner wall of said at least one double vacuum tube (1) and an inner portion (7a), connected to the first peripheral portion (6a), intended to extend at least partially in contact with the heat-collecting tube (3), the first conductive element (4a) further including a pivot element (PI),
- a second conductive element (4b), including a second peripheral portion (6b) intended to extend at least partially in contact with the inner wall of said at least one double vacuum tube (1), the second conductive element (4b) further including a second connection portion (8b) with the first conductive element (4a), the second connection portion (8b) being mounted in rotation on the pivot element (P1) of the first conductive element (4a) so as to allow the rotational movement of the second conductive element (4b) relative to at the first conductive element (4a),
- an elastic return member (5) in contact with at least the second conductive element (4b), able to exert an elastic return force on the second conductive element (4b) for driving it in rotation relative to the first conductive element (4a), in contact with the inner wall of said at least one double vacuum tube (1).

2. The thermal conductor according to claim 1, **characterized in that** the inner portion (7a) of the first conductive element (4a) has a tubular shape forming the heat-collecting tube (3), and defining in particular a heat pipe.

3. The thermal conductor according to claim 1, **characterized in that** the first conductive element (4a) includes in cross-section at least two inner portions, connected to the first peripheral portion (6a), having a tubular shape forming at least one heat-collecting tube (3), and defining in particular a U-shaped tube for the circulation of a coolant or at least two heat pipes, the inner portion(s) (7a) of the first conductive element (4a) including in particular internally reliefs, including grooves and/or fins.

4. The thermal conductor according to any one of the preceding claims, **characterized in that** the inner portion(s) (7a) of the first conductive element (4a) is/are connected to the first peripheral portion (6a) of the first conductive element (4a) via one or several first connection arm(s) (9a) of the first conductive element (4a) ensuring the thermal transfer between the first peripheral portion (6a) and the inner portion(s) (7a).

5. The thermal conductor according to any one of the preceding claims, **characterized in that** the pivot element (P1) has a cylindrical shape and includes a flat section (13b) for mounting the second conductive element (4b) on the pivot element (P1) of the first conductive element (4a) .

6. The thermal conductor according to any one of the claims preceding, **characterized in that** the first conductive element (4a) includes a second pivot element (P2) and **in that** the thermal conductor (4) further includes:
- a third conductive element (4c), including a third peripheral portion (6c) intended to extend at least partially in contact with the inner wall of said at least one double vacuum tube (1), the third conductive element (4c) further including a third connection portion (8c) with the first conductive element (4a), the third connection portion (8c) being mounted in rotation on the second pivot element (P2) of the first conductive element (4a) so as to allow the rotational movement of the third conductive element (4c) relative to the first conductive element (4a),
the elastic return member (5) bearing on at least the second conductive element (4b) and the third conductive element (4c), able to exert an elastic return force on the second conductive element (4b) and the third conductive element (4c) to drive them in rotation relative to the first conductive element (4a) and move them apart from each other, in contact with the inner wall of said at least one double vacuum tube (1).

7. The thermal conductor according to any one of the preceding claims, **characterized in that** the first peripheral portion (6a) of the first conductive element (4a) has a longitudinal length (L1) less than the longitudinal length (L2) of the inner portion(s) (7a) of the first conductive element (4a) so that the inner portion(s) (7a) protrude(s) from the first peripheral portion (6a) from the first conductive element (4a) to at least one of the two ends of the first conductive element (4a).

8. The thermal conductor according to any one of the preceding claims, **characterized in that** the elastic return member (5) includes:
- a central portion (5a), secured to the inner portion (7a) of the first conductive element (4a), and at least one branch (5b) able to bear on a holder (15b) formed on the second peripheral portion (6b) of the second conductive element (4b),
or,
- a spring provided with a plurality of strips (5c) arranged on at least one strip holder (16b) of at least the second conductive element (4b),
or,
- a flat spring bearing on at least the inner portion (7a) of the first conductive element (4a) and the second peripheral portion (6b) of the second conductive element (6b) .

9. A solar thermal collector (10) with double vacuum tubes, comprising a plurality of double vacuum tubes (1) and a collector to which is connected the plurality of double vacuum tubes (1), at least one double vacuum tube (1) including:
- a heat-collecting tube (3) extending inside the double vacuum tube (1), connected to said collector,
- a heat-absorbing element (2) secured to the inner wall of said at least one double vacuum tube (1), able to absorb the solar radiation passing through said at least one double vacuum tube (1),
- a thermal conductor (4) according to any one of the preceding claims, in contact with the heat-collecting tube (3) and the inner wall of said at least one double vacuum tube (1), to ensure a thermal transfer from the inner wall of said at least one double vacuum tube (1) to the heat-collecting tube (3), which then carries heat to said collector of the solar thermal collector (10).

10. The collector according to claim 9, **characterized in that** said at least one double vacuum tube (1) includes an external tube (1a) and an internal tube (1b) between which a vacuum (V) is formed, the heat-absorbing element (2) being disposed in contact with the outer wall of the internal tube (1b), having in particular the form of an absorbent layer (2) at least partially covering the inner wall of the internal tube (lb).

11. The collector according to claim 9 or 10, **characterized in that** the first conductive element (4a) has a larger maximum transverse dimension (Da) equal to the minimum inner diameter (Di) of said at least one double vacuum tube (1).

12. The collector according to any of claims 9 to 11 **characterized in that** the first conductive element (4a) is mostly located in a first half (M1) of the internal volume (Vi) of said at least one double vacuum tube (1) and **in that** the second conductive element (4b) is mostly located in a second half (M2) of the internal volume (Vi) of said at least one double vacuum tube (1), the first (M1) and second (M2) halves together defining the internal volume (Vi) of said at least one double vacuum tube (1), the longitudinal axis (XP1) of the pivot element (P1) being located in the first half (M1) of the internal volume (Vi) of said at least one double vacuum tube (1).

13. The collector according to any one of claims 9 to 12, **characterized in that** the first conductive element (4a) is mostly located in a first half (M1) of the internal volume (Vi) of said at least one double vacuum tube (1) and **in that** the second conductive element (4b) is mostly located in a second half (M2) of the internal volume (Vi) of said at least one double vacuum tube (1), the first (M1) and second (M2) halves together defining the internal volume (Vi) of said at least one double vacuum tube (1), the point(s) of contact between the second conductive element (4b) of the thermal conductor (4) and the inner wall of said at least one double vacuum tube (1) being located in the second half (M2) of the internal volume (Vi) of said at least one double vacuum tube (1).

14. The collector according to claim 13, **characterized in that** the second peripheral portion (6b) of the second conductive element (4b) includes at least one boss (14b) on its surface vis-à-vis the inner wall of said at least one double vacuum tube (1) to come into contact with the inner wall of said at least one double vacuum tube (1).

15. A concentrated solar thermal plant, **characterized in that** it includes a plurality of solar thermal collectors (10) with double vacuum tubes according to any one of claims 9 to 14.
